Europäisches Patentamt

European Patent Office

Office européen des brevets

(11) Publication number: **0 506 181 A1**

# EUROPEAN PATENT APPLICATION

(21) Application number: **92200782.8**

(22) Date of filing: **18.03.92**

(51) Int. Cl.⁵: **F16L 55/16**

(30) Priority: **26.03.91 NL 9100537**

(43) Date of publication of application:
**30.09.92 Bulletin 92/40**

(84) Designated Contracting States:
**AT DE DK FR GB SE**

(71) Applicant: **WAVIN B.V.**
**Händellaan 251**
**NL-8031 EM Zwolle(NL)**

(72) Inventor: **van Beurden, Karin Monique Maria**
**35, Leerlooierstraat**
**NL-7447 XZ Hellendoorn(NL)**
Inventor: **ter Wijlen, Hendrikus**
**44, Lisdodde**
**NL-7701 AA Dedemsvaart(NL)**

(74) Representative: **Barendregt, Drs. F. et al**
**EXTERPATENT B.V. P.O. Box 3241**
**NL-2280 GE Rijswijk(NL)**

(54) **Method for lining from the inside a connection between a main pipe and a branch pipe, using an expandable sleeve of hardenable material, and a sleeve suitable for the purpose.**

(57) For the lining from the inside of a connection (4) between a main pipe (1) with or without a lining (2) and a lined or unlined branch pipe (3), the lining (2) of the main pipe (1), if present, is provided with an opening which is aligned with the branch pipe (3). A sleeve (5) of a hardenable material is placed with the use of suitable tools in the opening of the connection (4) and then expanded in order to make the sleeve (5) interact in a press fit with the connection (4). The sleeve (5) is then hardened. The sleeve (5) used is provided at the outside with sealing means (6, 7), preferably rubber rings, which after expansion of the sleeve (5) interact in a sealing manner with the lined or unlined main pipe (1) and branch pipe (3) near the connection (4).

Fig.2

The present invention relates to a method for lining from the inside a connection between a lined or unlined main pipe and a lined or unlined branch pipe, in which any lining of the main pipe is or will be provided with an opening which is aligned with the branch pipe, and where a sleeve of a hardenable material is placed by means of suitable tools in the opening of the connection and is then expanded in order to bring the sleeve into a press-fit interaction with the connection, following which the sleeve is hardened.

Such a method is known from British Patent Specification GB-A-2 147 966. In this method a sleeve of hardenable material is placed on a carrier which can be expanded remotely in the connection between a main pipe and a branch pipe, following which the sleeve is expanded in the connection by inflating the carrier, with the result that the sleeve is brought into contact with the branch pipe and the main pipe, following which the sleeve is hardened, and it can fulfil its lining function.

A major disadvantage of such a method is that there is still a risk of leakage along the sleeve between the lining of the main pipe and the main pipe itself or between the lining of the branch pipe and the branch pipe itself. This means that the medium conveyed through the pipes, for example effluent or the like, can penetrate between the lining and the inside of the pipe in question. In the above-mentioned British publication a sleeve of thermosetting material is used. Such a material is expensive, difficult to handle, and brittle. A sleeve of thermosetting material will be able to absorb hardly any deformations. When relatively small deformations occur, the sleeve will already start leaking.

The above-mentioned linings will generally be pulled over a certain length through the pipes and brought into contact with the inside wall of the pipe through expansion, for example under the influence of pressure and temperature. An example of such a technique is described in British Patent Specification GB-A-2 188 695. A heatable pressure medium is used in this case. Such a lining is fitted in order to repair old, possibly already leaking pipes, in particular sewer pipes. When the pipes are being lined there is the problem of lining the connection between a branch pipe and a main pipe, since the lining of the main pipe has to be drilled through locally and the lined or unlined branch pipe has to be connected to the main pipe (lining) in a leakproof manner. The method according to GB-A-2 147 966 does not appear to provide a satisfactory solution to this, since the risk of leakage remains.

The object of the present invention is to provide a solution to the above-mentioned disadvantage, and to that end it is characterised in that use is made of a sleeve which is provided on the outside with sealing means which after expansion of the sleeve interact in a sealing manner with the lined or unlined main pipe and branch pipe near the connection.

The presence of the sealing means which after expansion of the sleeve can interact in a sealing manner with the particular pipes to be connected means that any leakage is out of the question, and an excellent connection is obtained.

The sealing means are preferably flat rubber rings with a profiled outside and having an excellent sealing effect.

The sealing means are particularly advantageously made from a plastically deformable material, preferably butyl rubber. Butyl rubber is a permanently plastic material which is very well capable of absorbing irregularities on the inside of the pipes to be connected, and it also has excellent adhesion to the sleeve.

Said sealing means can, of course, also be made of materials which, for example, swell under the influence of the medium conveyed through the pipe, such as water or the like.

After the expansion of the sleeve in the connection between the lined or unlined main pipe and branch pipe, the sleeve can be finished in various ways.

An end part of the sleeve projecting into the lined or unlined main pipe can be removed after the fitting in such a way that at the remaining end of the sleeve a profile corresponding essentially to the inside of the lined or unlined main pipe is produced. A projecting end part of the sleeve can also be turned back in such a way during the expansion that a collar running in the axial direction of the main pipe is formed on the sleeve, following the profile of the lined or unlined main pipe. The sleeve can, of course also already be provided such a collar or an extension for the purpose before the expansion thereof takes place.

The sealing effect of the sleeve is improved by such a special finish of the end part of the sleeve projecting into the lined or unlined main pipe, due to the fact that the contact surface of the sealing means with the main pipe and/or the lining is increased.

The sealing means are preferably present after expansion of the sleeve between the sleeve and the inside of the lined or unlined branch pipe, between the sleeve and the opening in the lined or unlined main pipe, and between the collar of the sleeve running in the axial direction of the main pipe and the inside of the lined or unlined main pipe.

In the method according to the invention it is advantageous to use a sleeve which is integral with the lining of the branch pipe and can consequently be fitted simultaneously with the lining of the branch pipe, so that an even better seal is, of course, obtained in the branch pipe.

The invention also relates to a sleeve intended for use in the method according to the invention, characterised in that the sleeve is provided on the outside with sealing means which after expansion of the sleeve can interact in a sealing manner with the lined or unlined main pipe and branch pipe near the connection.

Such a sleeve is preferably made of a thermoplastic plastic, since thermoplastic plastics can be expanded under the influence of heat and pressure, following which the plastic sets when the temperature is lowered. Thermoplastic plastic also has the ability to absorb deformations of the sleeve.

The invention will be explained in greater detail below with reference to the appended drawing, in which:

Fig. 1 shows a cross-section of a connection between a main pipe and a branch pipe, which connection is lined with a sleeve according to the invention;

Fig. 2 shows the same cross-section as Fig. 1, in which the angle between the branch pipe and the main pipe is less than 90°;

Fig. 3 shows a cross-section of a main pipe and a branch pipe, in which the connection is lined with a sleeve which is integral with the lining of the branch pipe;

Figs. 4a - 4c show three examples of finishing for the end part of the sleeve according to the invention projecting into the main pipe; and

Fig. 5 shows two embodiments of the sleeve, in the non-expanded state.

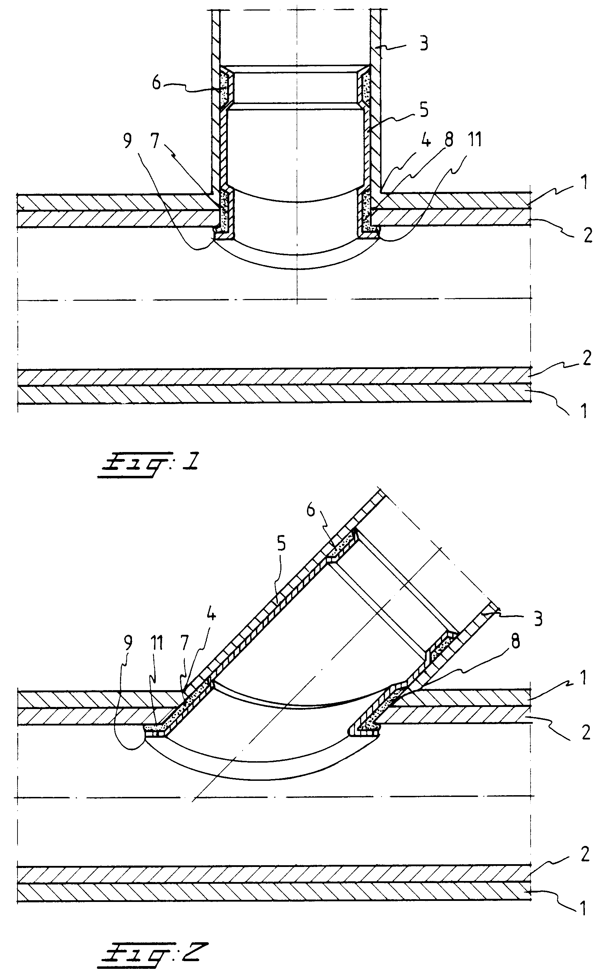

Fig. 1 shows by way of example a sewer pipe 1, which is provided on the inside with a lining 2, which is fitted through expansion, for example under the influence of heat and pressure. Reference number 3 indicates a branch pipe which connects at right angles to the sewer pipe 1. This branch pipe 3 could also be provided with a corresponding lining, but for the sake of clarity of the figures this provision is not shown.

In order to line the connection 4 between the branch pipe 3 and the sewer pipe 1, for the purpose of preventing leakage between the sewer pipe lining 2 and the sewer pipe 1, and possibly between a lining of the branch pipe and the branch pipe itself, a sleeve 5 made of a thermoplastic plastic is fitted. Said sleeve 5 in the situation shown in Fig. 1 has a larger diameter than before it was fitted.

The sleeve 5 comprises sealing means in the form of flat rubber rings 6 and 7 and is fitted from the inside in the connection 4 and expanded with the aid of known techniques until it is in the state shown in Fig. 1. This means that the sleeve 5 itself is brought at least locally, with the interposition of sealing means in the form of rubber rings 6, 7, into a press-fit interaction with the branch pipe 3 and main sewer pipe 1, which may or may not be provided with appropriate linings.

Said rubber rings 6, 7 are preferably made of butyl rubber, which is a permanently plastic material and is extremely suitable for sealing on irregular surfaces. It can in fact happen that the opening 8 in the sewer pipe 1 and lining 2 is not finished smoothly. Where sleeves according to the state of the art are used, inadequate sealing is obtained in such a case.

During the expansion of the sleeve 5 the end 9 of the sleeve in the sewer pipe 1 can be turned back around the lining 2 present therein, forming a collar 11. This turn-back can be finished in many ways, in order to bring it into line with the profile of the lining of the pipe 1. It could therefore be completely removed, so that the end of the sleeve 5 in the end lies in line with the lining 2.

The sleeve 5 is preferably provided with sealing means, for example the rubber rings 6, 7 shown, at the position of the opening 8 in the sewer pipe 1 and the lining 2 present therein, and also in the branch pipe 3. The number of rings is, of course, not important, but it is advantageous for rings to be present at least at the ends of the sleeve 5.

The expansion of the sleeve can be carried out in the manner known per se with a heatable, inflatable balloon. The heating of the balloon means that the sleeve 5 placed thereon is made warm and deformable. The inflation of the balloon causes the expansion of the sleeve until it is resting taut against the inside of the opening in the lined or unlined main pipe 1 and the lined or unlined branch pipe 3. If cold air is then blown through the balloon, it cools down, and so does the sleeve 5. After complete cooling, the balloon can then be deflated and removed.

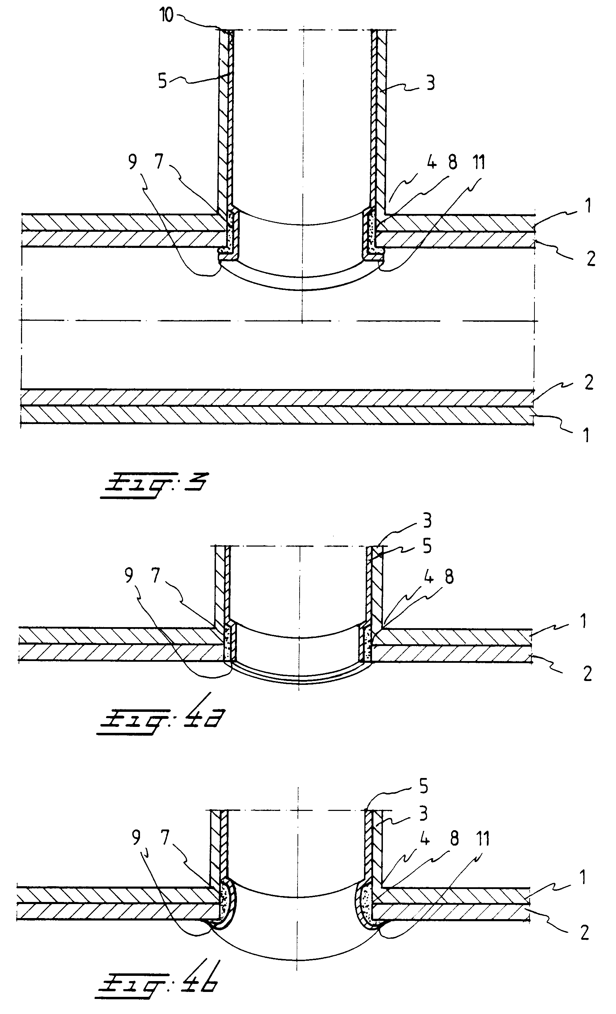

The form of a branch 3 on a sewer pipe 1 shown in Fig. 1 is the simplest form, but in many cases the branch lines 3 do not connect at right angles to the main pipe but, for example, at an angle of 45°, as shown in Fig. 2, in which corresponding parts are indicated by the same reference numbers.

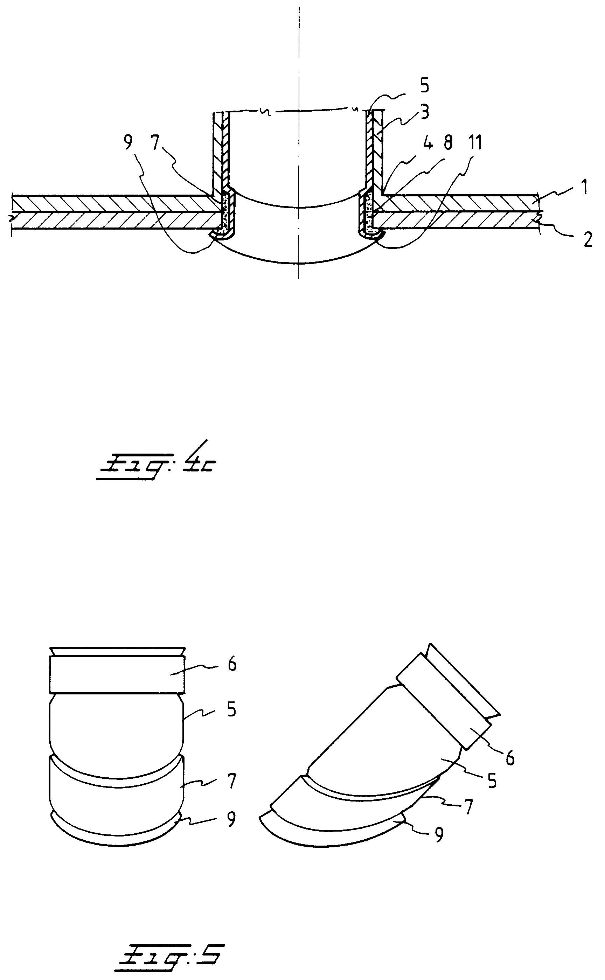

Fig. 3 shows a special embodiment of the sleeve according to the invention, in a connection 4 between a branch pipe 3 and a sewer pipe 1 with lining 2. The sleeve 5 in this case is made integral with the lining 10 of the branch pipe 3, while the sealing ring 6 is omitted, and one sealing ring 7 is sufficient.

The sewer pipe 1 in this case is first of all provided with a lining 2, which is pushed into the pipe 1 and through expansion made to interact in a press fit with the pipe 1 shown in Fig. 3. An opening, aligned with the branch pipe 3, is then made in the lining 2 by way of the branch pipe 3 or the pipe 1, using suitable tools which are known in the state of the art. The lining 10, which at the end is provided with a sleeve 5 with sealing ring 7, is then inserted through the branch pipe 3, following which the lining 10 with the sleeve 5 is expanded and hardened in the connection 4 using means suitable for the purpose.

The advantage of this embodiment is that any leakage from the branch pipe is completely eliminated.

Figures 4a - 4c show three embodiments of the finish of the end part 9 of the sleeve 5 projecting into the sewer pipe 1.

In Fig. 4a the end part 9 is removed completely after fixing of the sleeve 5, so that the end face of the sleeve lies fully in the curved face of the lining 2 of the sewer pipe 1.

In Fig. 4b the end part 9 is turned back during the expansion of the sleeve 5, and thus forms a narrow collar fitting closely against the lining 2, while a part of the sealing ring 7 is also turned back. The end part is also finished, in order to ensure that it passes uniformly into the inner surface of the main pipe 1.

Fig. 4c shows an embodiment in which a sleeve 5 already provided in advance with a collar 11 is used. The advance fitting of such a collar 11 simplifies the insertion of the sleeve 5 from the side of the sewer pipe 1, and an extremely accurate positioning is obtained by the collar 11 making contact. Said collar 11 can, of course be finished suitably after positioning of the sleeve 5.

In another embodiment the collar 11 is present only as an extension. The latter then serves not to facilitate the positioning, but to simplify the turning back of the collar 11 and the sealing ring 7, and thus to improve the seal further.

Figs. 5a and 5b show respectively the sleeves 5 according to the invention shown in Figs. 1 and 2, not expanded. These are only two embodiments, and many others will be obvious to the expert. For example, as discussed with reference to Fig. 4c, the sleeve 5 can be provided at the end part 9 which is to project into the sewer pipe 1 with a collar 11 or similar turned back edge, in order to facilitate an accurate positioning of the sleeve 5.

**Claims**

1. Method for lining from the inside a connection (4) between a lined or unlined main pipe (1) and a lined or unlined branch pipe (3), in which any lining (2) of the main pipe (1) is or will be provided with an opening which is aligned with the branch pipe (3), and where a sleeve (5) of a hardenable material is placed by means of suitable tools in the opening of the connection (4) and is then expanded in order to bring the sleeve (5) into a press-fit interaction with the connection (4), following which the sleeve (5) is hardened, **characterised in that** use is made of a sleeve (5) which is provided on the outside with sealing means which after expansion of the sleeve (5) interact in a sealing manner with the lined or unlined main pipe (1) and branch pipe (3) near the connection (4).

2. Method according to claim 1, **characterised in that** the sealing means comprise rubber rings (6, 7) with a profiled outside.

3. Method according to claim 1 or 2, **characterised in that** the sealing means are made of a plastically deformable material.

4. Method according to claims 1 - 3, **characterised in that** the sealing means are made of butyl rubber.

5. Method according to one or more of claims 1 - 4, **characterised in that** an end part (9) of the sleeve (5) projecting into the lined or unlined main pipe (1) can be removed after the fitting by finishing in such a way that at the remaining end of the sleeve (5) a profile corresponding essentially to the inside of the lined or unlined main pipe (1) is produced.

6. Method according to one or more of claims 1 - 4, **characterised in that** an end part (9) of the sleeve projecting into the lined or unlined main pipe (1) is turned back in such a way during the expansion that a collar (11) running in the axial direction of the main pipe is formed on the sleeve (5), following the profile of the lined or unlined main pipe.

7. Method according to one or more of claims 1 - 4, **characterised in that** at the side interacting with the lined or unlined main pipe (1) the sleeve is provided in advance with a collar (11) running in the axial direction of the main pipe (1) after positioning of the sleeve, said collar following the profile of the lined or unlined main pipe (1).

8. Method according to claim 6 or 7, **characterised in that** the sealing means are present after expansion of the sleeve (5) between the sleeve (5) and the inside of the lined or unlined branch pipe (3), between the sleeve (5) and the opening (8) in the lined or unlined main pipe (1), and between the collar (11) of the sleeve (5) running in the axial direction of the main pipe (1) and the inside of the lined or unlined main pipe (1).

9. Method according to one or more of the preceding claims, **characterised in that** a sleeve (5) which is integral with the lining (10) of the branch pipe (3) is used.

10. Sleeve intended for use in the method according to one or more of claims 1 - 9, **characterised in that** the sleeve (5) is provided on the outside with sealing means which after expansion of the sleeve (5) can interact in a sealing manner with the lined or unlined main pipe (1) and branch pipe (3) near the connection (4).

11. Sleeve according to claim 10, **characterised in that** it is made of a thermoplastic plastic.

*Fig: 1*

*Fig: 2*

*Fig. 3*

*Fig. 4a*

*Fig. 4b*

*Fig. 4c*

*Fig. 5*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CH-A-673 885 (KELDANY)<br>* abstract; figures *<br>--- | 1,2,7-10 | F16L55/16 |
| X | GB-A-2 041 147 (FUSION EQUIPMENT LTD.)<br>* abstract; figure 6 *<br>--- | 1,7-10 | |
| A | WO-A-8 908 218 (MACKAY)<br>* abstract; figure 2 *<br>--- | 1,6-10 | |
| A | DE-A-3 618 963 (VOSS)<br>* abstract; figure 1 *<br>--- | 1,2,6-10 | |
| A | NL-A-6 703 490 (WAVIN N.V.)<br>* figures 1,2 *<br>--- | 1,7-10 | |
| A | NL-A-7 014 525 (DYNAMIT NOBEL A.G.)<br>* figures 1-5 *<br>--- | 1,7-10 | |
| P,X | WO-A-9 107 619 (MEIJERS)<br>* abstract; figures 9,10,11 * | 1-11 | |
| | ----- | | TECHNICAL FIELDS SEARCHED (Int. Cl.5)<br><br>F16L<br>E03F |

The present search report has been drawn up for all claims

| Place of search | Date of completion of the search | Examiner |
|---|---|---|
| THE HAGUE | 11 JUNE 1992 | HUBEAU M.G. |